# EUROPEAN PATENT SPECIFICATION

(11) **EP 2 447 039 B1**
(45) Date of publication and mention of the grant of the patent: **22.01.2014**
(21) Application number: 10425342.2
(22) Date of filing: 28.10.2010
(51) Int. Cl.: B29C 51/26, B29C 51/18, B29C 51/42, B29C 51/38, B29C 51/10, B29C 51/08

(54) **Improved thermo-forming machine for plates**
Verbesserte Wärmeformmaschine für Platten
Machine de thermoformage améliorée pour plaques

(43) Date of publication of application: 02.05.2012
(73) Proprietor: O.M.G. S.R.L., 10040 Givoletto (TO) (IT)
(72) Inventor: Fretta, Roberto, 10040 Givoletto (TO) (IT)
(74) Representative: Garavelli, Paolo

(56) References cited:
- EP-A1- 0 692 365
- BE-A1- 899 414
- DE-C1- 19 536 867
- FR-A1- 2 686 543

## Description

The present invention refers to an improved thermo-forming machine aimed for working and stamping plates made of plastic material.

Thermo-forming machines aimed to stamp plates made of plastic material are known in the art: they are generally composed of a positioning plane of the plate to be worked that, before stamping, is heated by one or more heating ovens or panels till the right softening degree is obtained. The plate is then vacuum stamped through a suitable die and possibly a related counter-die.

The above known machines however have some inconveniences. In such machines, in fact the positioning plane of the plate is typically centred with respect to the die, this compelling the possible operator to greatly hold himself out inside the machine in order to correctly position the plate itself next to such die, thereby requiring uncomfortable and relatively dangerous working operations.

Moreover, in known machines, in order to perform a reduction of the sizes of the positioning plane in order to suit it, for example, for working plates whose sizes are shorter that those of the plane itself, a metallic frame is generally made, cut with plasma and having the shape of a template to be placed on the positioning plane and inside which the plate to be stamped must be placed. Such operation is obviously long and scarcely practical. Alternatively, some machines comprise motored mobile templates composed of a parallelogram-type kinematism that can assume the sizes of the plate to be stamped: such templates however have a rather scarce reliability since the fumes of the stamped plastic material are often introduced inside the above kinematism, impairing, or even preventing, its operation.

Moreover, in known machines, handling of the die-carrier plane, the counter-die and the locking frame of the plate on the positioning plane usually occurs through pneumatic or oil-dynamic systems or brushless electric motors with ball re-circulating screws: such handling systems however require continuous and accurate lubrications of moving members and have problems dealing with procuring and finding their spare parts.

Moreover, in known machines, the carriages carrying ovens or heating panels are usually pneumatically or electrically handled: in the first case, for safety reasons, the pneumatic handling system is equipped with at least one mono-stable valve adapted to intervene in case of emergency; in the second case, always for safety reasons, it is instead necessary to use electrical backup units that ensure that the carriage can move back even in case of lack of electric supply from mains. The first system has the disadvantage of having an excessive air consumption and a low translation speed. The second system, instead, can have the problem that accumulating batteries, that should prevent the lack of electric supply from mains, sometimes, due to their degraded status or due to time, do not intervene as required by safety.

BE-A1-899414 and FR-A1-2686543 disclose thermo-forming machines according to the preamble of Claim 1.

Therefore, object of the present invention is solving the above prior art problems by providing an improved thermo-forming machine equipped with a positioning plane of the plate frontally arranged along the front side of the machine, making the positioning operation of the plate easier, more practical and safer.

Moreover, an object of the present invention is providing an improved thermo-forming machine equipped with a reduction system for the plate format that can be more practically and reliably used.

Another object of the present invention is providing an improved thermo-forming machine equipped with a handling system of the die-carrier plane or the locking frame with belt-type transmissions, resulting more reliable, requiring less lubrication with respect to prior art handling systems.

Moreover, an object of the present invention is providing an improved thermo-forming machine equipped with an handling system (one for each carriage) of the heating carriages comprising both at least one electrical handling motor during the normal automatic working cycle, and a pneumatic motor operating in case of emergency to ensure anyway that the carriage comes back.

Another object of the present invention is providing an improved thermo-forming machine equipped with a system for centring the counter-die onto the plate to be stamped.

Moreover, an object of the present invention is providing an improved thermo-forming machine equipped with a reduction system of the format of the plate comprising at least one system for exhausting the stamping fumes.

The above and other objects and advantages of the invention, as will appear from the following description, are obtained with an improved thermo-forming machine as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) could be made to what is described without departing from the scope of the invention as appears from the enclosed claims.

The present invention will be better described by some preferred embodiments thereof, provided as a non-limiting example, with reference to the enclosed drawings, in which:
- Figure 1 shows a top perspective view of a preferred embodiment of the improved thermo-forming machine according to the present invention;
- Figures 2a and 2b respectively show a sectional view and a plan view of a preferred embodiment of a component of the improved thermo-forming machine according to the present invention;

- Figure 3 shows a top perspective view of a preferred embodiment of another component of the improved thermo-forming machine according to the present invention; and
- Figure 4 shows a top perspective view of a preferred embodiment of a further component of the improved thermo-forming machine according to the present invention.

For briefness, herein below the description will be omitted when related to parts and components common with other thermo-forming machines and necessary for the main operation of the machines themselves, that anyway are deemed widely known in the art, in order to describe in particular the aspects and the components characterising the thermo-forming machine according to the present invention.

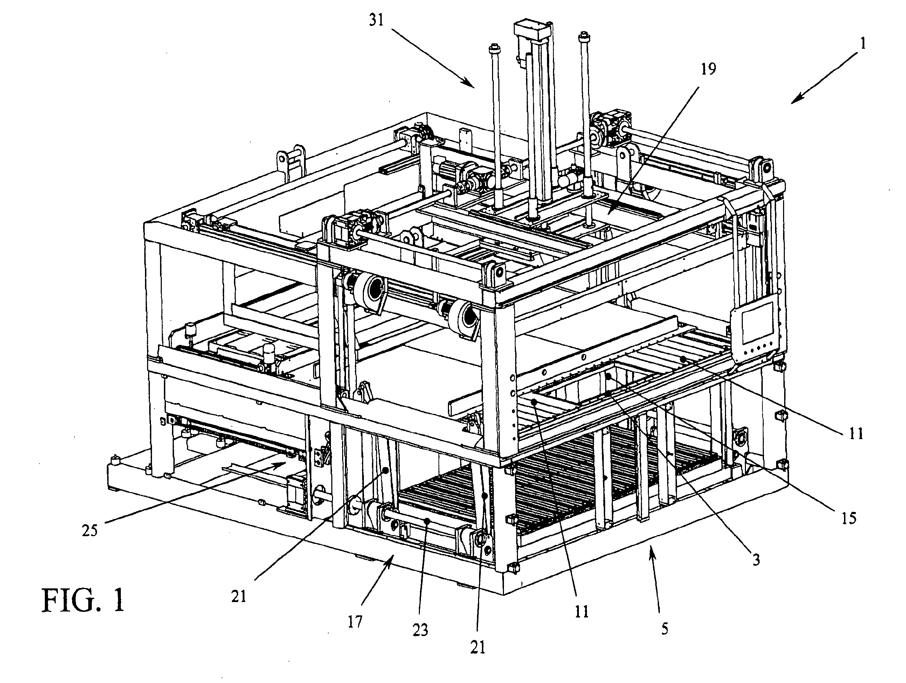

With reference then to Figure 1, it is possible to note that, advantageously, the improved thermo-forming machine 1 according to the present invention, aimed for working and stamping plates (not shown) made of plastic material comprises at least one positioning plane 3 for such plates frontally arranged along the front side 5 of the machine 1 in order to make the operation of loading the plates on such plane 3 easier and safer.

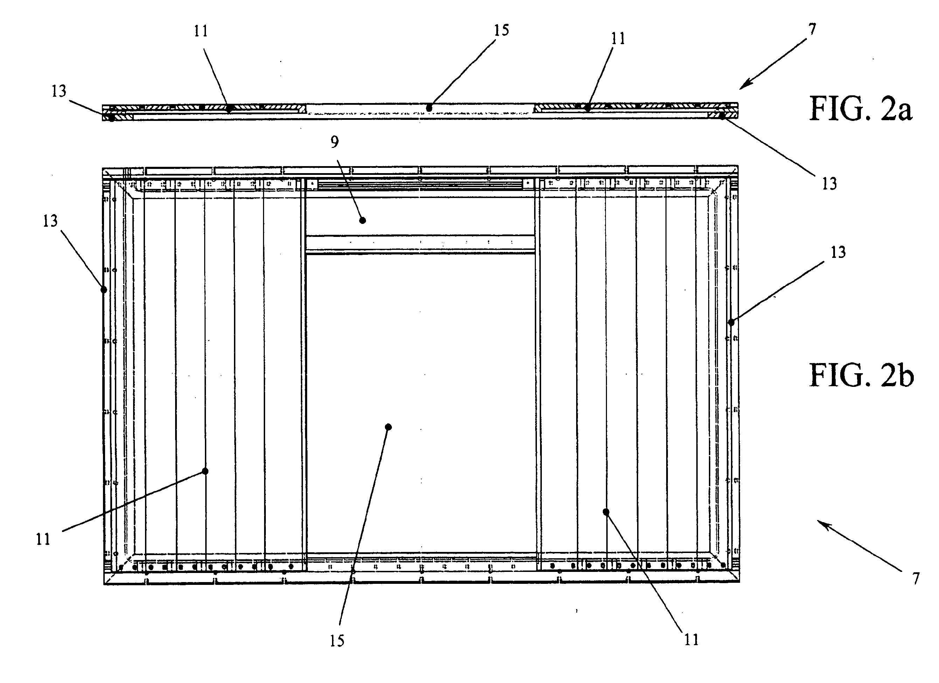

Always advantageously, and with reference in particular also to Figures 2a and 2b, the positioning plane 3 is equipped with a reduction system 7 of the plate format composed of at least one mobile rear longitudinal frame member 9, equipped with motored handling devices, and a plurality of side listels 11 that can be fastened along the locking frame 13 of the plate in succession and possibly in overlapping manner in such a number as to define, in cooperation with the positioning of such mobile rear longitudinal frame member 9, the desired sizes of the space 15 adapted to house the plate, advantageously offset and more frontal in order to make its manual loading by an operator easier.

In addition, the reduction system 7 is lifted at the end of every working cycle for exhausting the stamping fumes and comprises at least one opening (not shown) for scavenging such fumes outside the machine 1 according to the present invention.

Always advantageously, the thermo-forming machine 1 according to the present invention is equipped with at least one handling system 17 of the die-carrier plane, the counter-die 19 and the locking frame 13 comprising at least one belt-type transmission 21 interposed between at least one rotary control shaft 23 and such die-carrier plane, counter-die 19 and locking frame 13 to be handled.

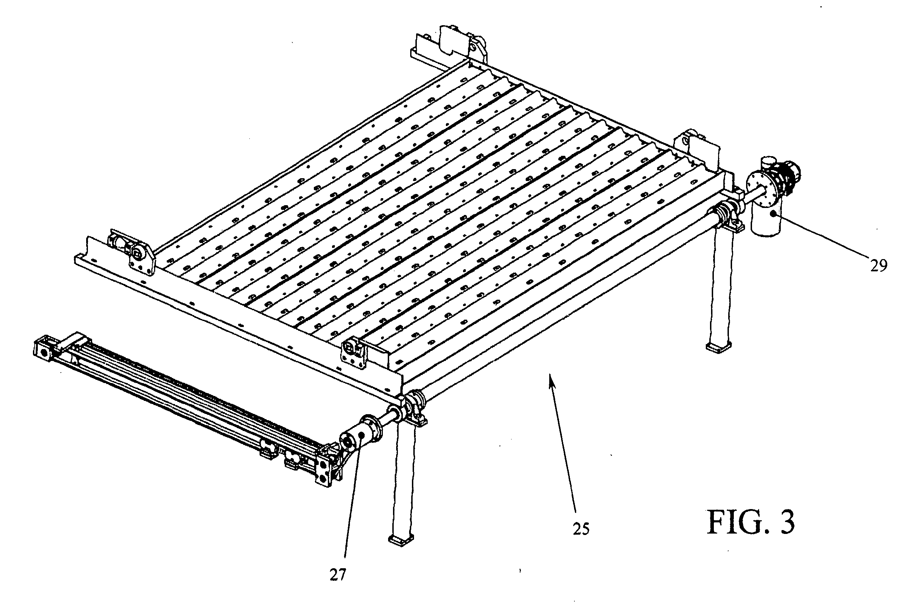

Always advantageously, and with reference in particular to Figure 3, the thermo-forming machine 1 according to the present invention is equipped with at least one handling system 25 of the heating carriages comprising:
- at least one electrical handling motor 29 adapted to handle such heating carriages during the normal automatic working cycle of the machine 1;
- at least one pneumatic actuator 27 adapted to handle such heating carriages in case of emergency to make the carriages come back.

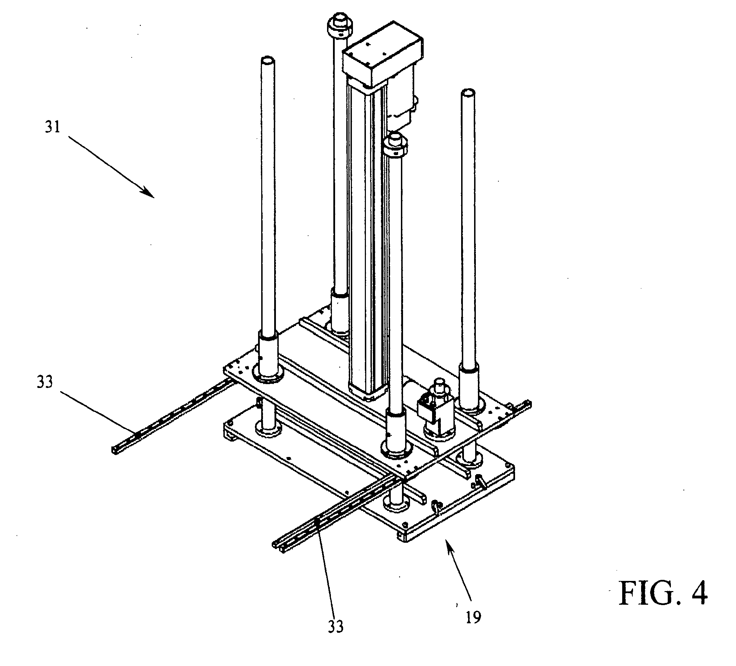

Always advantageously, and with reference in particular to Figure 4, the thermo-forming machine 1 according to the present invention is equipped with at least one motored centring system 31 of the counter-die 19 on the plate to be stamped, such system 31 comprising at least one sliding guide 33 adapted to allow the translation of the counter-die 19 between a rest position (as shown as an example in Figures 1 and 4) and a working position in which it is axial with the die (not shown) and detecting means (comprising, for example, at least one encoder) of the relative position of the counter-die 19 with respect to such guide 33 and adapted to allow a perfect centring of such counter-die 19 with the die offset with respect to the plane.

## Claims

1. Improved thermo-forming machine (1) adapted to work and stamp plates made of plastic material, comprising at least one positioning plane (3) of said plates frontally arranged along a front side (5) of said machine (1), namely a side (5) where plates are fed into said machine (1), **characterised in that** said positioning plane (3) is equipped with a reduction system (7) of a format of said plate composed of at least one mobile rear longitudinal frame member (9) and of a plurality of side listels (11) that are fastened along a locking frame (13) of said plate in succession and in overlapping manner such a number as to define, in cooperation with the positioning of such mobile rear longitudinal frame member (9), the desired sizes of the space (15) adapted to house the plate.

2. Improved thermo-forming machine (1) according to claim 1, **characterised in that** said mobile rear longitudinal frame member (9) is equipped with motored handling devices.

3. Improved thermo-forming machine (1) according to claim 1, **characterised in that** said reduction system (7) is equipped with at least one system for exhausting the stamping fumes comprising at least one scavenging opening of said fumes outside said machine (1).

4. Improved thermo-forming machine (1) according to claim 1, **characterised in that** it is equipped with at least one handling system (17) of a die-carrier plane, of a counter-die (19) and of a locking frame (13) comprising at least one belt-type transmission (21) interposed between at least one rotary control shaft (23) and said die-carrier plane, and locking frame (13) to be handled.

5. Improved thermo-forming machine (1) according to claim 1, **characterised in that** it is equipped with at least one handling system (25) of heating carriages comprising at least one electrical handling motor (29) adapted to handle said heating carriages during a normal automatic working cycle of said machine (1) and at least one pneumatic actuator (27) adapted to handle said heating carriages in case of emergency to make said carriages come back.

6. Improved thermo-forming machine (1) according to claim 1, **characterised in that** it is equipped with at least one motored centring system (31) of a counter-die (19) on said plate to be stamped.

7. Improved thermo-forming machine (1) according to claim 6, **characterised in that** said system (31) comprises at least one sliding guide (33) adapted to allow a translation of said counter-die (19) between a rest position and a working position in which it is overlapping said positioning plane (3) and a die and detecting means of a relative position of said counter-die (19) with respect to said guide (33) and adapted to allow a perfect centring of said counter-die (19) with said positioning plane (3) and die.

8. Improved thermo-forming machine (1) according to claim 7, **characterised in that** said detecting means comprise at least one encoder.

## Patentansprüche

1. Optimierte Thermoformmaschine (1), die für die Bearbeitung und das Pressen von Kunststoffplatten bestimmt ist, und mindestens eine Positionierfläche (3) der genannten Platten einschließt, die frontal längs einer Frontseite (5) der genannten Maschine (1) angeordnet ist, d. h. eine Seite (5), wo die Platten in die genannte Maschine (1) geführt werden, und **dadurch gekennzeichnet ist, dass** die genannte Positionierfläche (3) mit einem Reduktionssystem (7) in einem Format der genannten Platte ausgestattet ist, das aus mindestens einem hinteren beweglichen Längsträger (9) und mehreren seitlichen Leisten (11) besteht, die längs eines Blockierrahmens (13) zusammen mit der Positionierung des entsprechenden hinteren beweglichen Längsträgers (9) in einer Anzahl befestigt sind, die die gewünschten Abmessungen des Raumes (15) definiert, der dazu dient, die Platte aufzunehmen.

2. Optimierte Thermoformmaschine (1) gemäß Patentanspruch 1, die **dadurch gekennzeichnet ist, dass** der genannte hintere bewegliche Längsträger (9) mit motorisierter Bewegung ausgestattet ist.

3. Optimierte Thermoformmaschine (1) gemäß Patentanspruch 1, die **dadurch gekennzeichnet ist, dass** das genannte Reduktionssystem (7) mit mindestens einem Dampfablasssystem des Pressvorgangs mit mindestens einer Ablassöffnung der genannten Dämpfe außerhalb der genannten Maschine (1) ausgestattet ist.

4. Optimierte Thermoformmaschine (1) gemäß Patentanspruch 1, die **dadurch gekennzeichnet ist, dass** sie mit mindestens einem Bewegungssystem (17) einer Formrahmenfläche, einem Gegengesenk (19) und einem Blockierrahmen (13) ausgestattet ist, der mindestens eine Riemenumlenkung (21) einschließt, die zwischen mindestens einer Drehantriebswelle (23) und den genannten Formrahmenflächen sowie dem zu bewegenden (13) Blockierrahmen angebracht ist.

5. Optimierte Thermoformmaschine (1) gemäß Patentanspruch 1, die **dadurch gekennzeichnet ist, dass** sie mit mindestens einem Bewegungssystem (25) aus Heizwagen mit mindestens einem Elektro-Bewegungsmotor (29) ausgestattet ist, der dazu dient, die genannten Heizwagen während eines normalen automatischen Betriebszyklus der genannten Maschine (1) und mindestens einen pneumatischen Antrieb (27) zu bewegen, der dazu dient, die genannten Heizwagen im Notfall zu bewegen, um einen Einzug dieser genannten Wagen auszuführen.

6. Optimierte Thermoformmaschine (1) gemäß Patentanspruch 1, die **dadurch gekennzeichnet ist, dass** sie mit mindestens einem motorisierten Zentriersystem (31) eines Gegengesenks (19) an der genannten zu pressenden Platte ausgestattet ist.

7. Optimierte Thermoformmaschine (1) gemäß Patentanspruch 6, die **dadurch gekennzeichnet ist, dass** das genannte System (31) mindestens eine Gleitschiene (33) einschließt, die dazu dient, eine Verschiebung des genannten Gegengesenks (19) zwischen einer Ruhestellung und einer Betriebsposition zu ermöglichen, in der es die genannte Positionierfläche (3) und ein Gesenk sowie Erfassungsgeräte einer Position im Verhältnis zum genannten Gegengesenk (19) gegenüber der genannten Schiene (33) überlappt, die dazu dienen, eine perfekte Zentrierung dieses Gegengesenks (19) mit der genannten Positionierfläche (3) und dem Gesenk zu ermöglichen.

8. Optimierte Thermoformmaschine (1) gemäß Patentanspruch 7, die **dadurch gekennzeichnet ist, dass** die genannten Erfassungsgeräte mindestens einen Encoder enthalten.

## Revendications

1. Machine thermoformeuse perfectionnée (1) destinée au travail et au moulage de plaques en matière plastique, comprenant au moins un plan de positionnement (3) desdites plaques disposé de face le long de la côté façade (5) de ladite machine (1), c'est-à-dire un côté (5) où les plaques sont alimentées dans ladite machine (1), **caractérisée par le fait que** ledit plan de positionnement (3) est doté d'un système de réduction (7) d'un format de ladite plaque composé d'au moins un longeron mobile arrière (9) et par une pluralité de lattes latérales (11) qui sont fixées le long d'un cadre de blocage (13) de ladite plaque en nombre tel à définir, en coopération avec le positionnement de ce longeron mobile arrière (9), les dimensions voulues de l'espace (15) apte à recevoir la plaque.

2. Machine thermo-formeuse perfectionnée (1) selon la revendication 1, **caractérisée par le fait que** ledit longeron mobile arrière (9) est doté de manutention motorisée.

3. Machine thermo-formeuse perfectionnée (1) selon la revendication 1, **caractérisée par le fait que** ledit système de réduction (7) est doté d'au moins un système d'évacuation des fumées de moulage comprenant au moins une ouverture d'évacuation desdites fumées à l'extérieur de ladite machine (1).

4. Machine thermo-formeuse perfectionnée (1) selon la revendication 1, **caractérisée par** le fait d'être dotée d'au moins un système de manutention (17) d'un plan porte-moules, d'un contre-moule (19) et d'un cadre de blocage (13) comprenant au moins un renvoi à courroie (21) interposé entre au moins un arbre rotatif de commande (23) et dudit plan porte-moules, et cadre de blocage (13) à manutentionner.

5. Machine thermoformeuse perfectionnée (1) selon la revendication 1, **caractérisée par** le fait d'être dotée d'au moins un système de manutention (25) de chariots de chauffage comprenant au moins un moteur électrique de manutention (29) apte à manutentionner lesdits chariots de chauffage pendant un cycle automatique normal de travail de ladite machine (1) et au moins un actionneur pneumatique (27) apte à manutentionner desdits chariots de chauffage en cas d'urgence pour effectuer un retour desdits chariots.

6. Machine thermoformeuse perfectionnée (1) selon la revendication 1, **caractérisée par** le fait d'être dotée d'au moins un système de centrage motorisé (31) d'un contre-moule (19) sur ladite plaque à mouler.

7. Machine thermoformeuse perfectionnée (1) selon la revendication 6, **caractérisée par le fait que** ledit système (31) comprend au moins un rail de coulissement (33) apte à permettre une translation dudit contre-moule (19) entre une position de repos et une position de travail dans laquelle se trouve en superposition audit plan de positionnement (3) et à un moule et moyens de détection d'une position relative dudit contre-moule (19) par rapport audit rail (33) et aptes à permettre un parfait centrage dudit contre-moule (19) avec lesdits plan de positionnement (3) et moule.

8. Machine thermoformeuse perfectionnée (1) selon la revendication 7, **caractérisée par le fait que** lesdits moyens de détection comprennent au moins un encoder.
